# EUROPEAN PATENT APPLICATION

(11) **EP 4 583 280 A1**
(43) Date of publication of application: **09.07.2025**
(21) Application number: 22958000.6
(22) Date of filing: 28.12.2022
(51) Int. Cl.: H01M 50/242, H01M 10/613

(54) **COOLING STRUCTURE, BATTERY AND ELECTRIC DEVICE**

(30) Priority: 05.09.2022 CN 202222344157 U
(71) Applicant: Contemporary Amperex Technology (Hong Kong) Limited, Hong Kong (HK)
(72) Inventor: HU, Lijun, Ningde, Fujian 352100 (CN); HOU, Yuepan, Ningde, Fujian 352100 (CN)
(74) Representative: Kraus & Lederer PartGmbB
(86) International application number: PCT/CN2022/142788
(87) International publication number: WO 2024/051044

(57) **Abstract**

The present application relates to a cooling structure, a battery and an electrical apparatus. The cooling structure comprises a cooling body and a supporting member, a flow channel is provided inside the cooling body, the supporting member is provided in the flow channel, the supporting member comprises at least two connecting sections and a plurality of buffer sections, every two adjacent connecting sections are fixedly connected to the two opposite inner surfaces of the cooling body along the thickness direction, and the buffer section connects two adjacent connecting sections and is configured to be able to elastically deform after being stressed. **In** the cooling structure of the present application, the supporting member can support the cooling body in its thickness direction, and the buffer section is configured to be able to elastically deform after being stressed. **In** this way, when the cooling body is stressed, the buffer section can absorb part of the stress to elastically deform, and the stress on the cold plate is dispersed through the entire supporting member to avoid stress concentration and reduce the impact of the stress on the cooling structure and battery cells, making the battery less susceptible to damage and ensuring its normal use.

## Description

### Cross-reference

The present application claims the priority of Chinese Patent Application No. CN202222344157.9 filed on September 05, 2022 and entitled "COOLING STRUCTURE, BATTERY, AND ELECTRICAL APPARATUS", the entire content of which is incorporated herein by reference.

### Technical Field

The present application relates to the field of secondary battery technologies, and in particular, to a cooling structure, a battery, and an electrical apparatus.

### Background

In order to meet the growing demand for high-power discharge and fast charge, the energy density of batteries continues to increase, and the heat generated by batteries during use is also increasing. Therefore, a cooling structure needs to be added to the battery to cool the battery.

In some cases, the battery cells in the battery assembly will press each other due to thermal expansion to cause both the battery cells and the cooling structure bear great stress, causing the battery to be easily damaged and affecting normal use.

### Summary of the Invention

Based on this, it is necessary to provide a cooling structure, a battery and an electrical apparatus to solve the problem that both the battery cell and the cooling structure are subjected to large stress, which causes the battery to be easily damaged and affects normal use.

According to an aspect of the present application, an embodiment of the present application provides a cooling structure, comprising: a cooling body provided with a flow channel inside; and a supporting member provided in the flow channel; wherein the supporting member comprises at least two connecting sections and a plurality of buffer sections, every two adjacent connecting sections are fixedly connected to the two opposite inner surfaces of the cooling body along the thickness direction, and the buffer section connects two adjacent connecting sections and is configured to be able to elastically deform after being stressed.

For the above-mentioned cooling structure, the supporting member is arranged in the flow channel of the cooling body, and every two adjacent connecting sections of the supporting member are fixedly connected to the two opposite inner surfaces of the cooling body in the thickness direction, by which the cooling body can be supported in its thickness direction. At the same time, the buffer section connects two adjacent connecting sections and is configured to be able to elastically deform after being stressed. In this way, when the cooling body is stressed, the buffer section can absorb part of the stress and elastically deform, and the stress on the cold plate is dispersed through the entire supporting member to avoid stress concentration and reduce the impact of the stress on the cooling structure and battery cells, making the battery less susceptible to damage and ensuring its normal use.

In one of embodiments, each of the connecting sections is attached to the inner surface of the cooling body, and at least one connecting section is provided with a protruding portion protruding toward the center of the flow channel along the thickness direction of the cooling body. By providing the protruding portion that protrudes toward the center of the flow channel along the thickness direction of the cooling body on the connecting section, when the cooling body is stressed, the protruding portion can abut against the inner surface of the cooling body opposite to the protruding portion, so that a certain gap is maintained between the two opposite inner surfaces of the cooling body in the thickness direction, thereby ensuring the normal use of the flow channel and preventing the flow channel from being crushed.

In one of embodiments, the protruding portion comprises a top wall and side walls respectively connected to both sides of the top wall; and the angle between the top wall and the side walls is greater than or equal to 90° and less than 180°. Such a design allows the shape of the protruding portion to change, thereby adjusting it according to different use requirements, and expanding the applicable scope of the cooling structure in the embodiment.

In one of embodiments, the plane where the top wall is located is parallel to the inner surface of the cooling body; the distance between the top wall and the inner surface of the cooling body connected to the top wall through the side wall is greater than or equal to 1 millimeter (mm) and less than or equal to 3 millimeters (mm). By making the plane where the top wall is located parallel to the inner surface of the cooling body, the contact area between the protruding portion and the inner surface of the cooling body can be increased, making the protruding portion more uniformly stressed and the structure more stable. By changing the distance between the surface of the top wall and the inner surface of the cooling body, the protruding height of the protruding portion is changed, making it easy to adjust the protruding degree of the protruding portion.

In one of embodiments, the protruding portion is arranged symmetrically about the center line of the connecting section where it is located. Such a design allows the protruding portion to be located at the center of the connection end where it is located. In this way, the force distribution between the protruding portion and the connecting section is more uniform and the structural stability is higher.

In one of embodiments, the cross-sectional shape of the buffer section is a straight line, a polyline or an arc. By changing the cross-sectional shape of the buffer section, the force distribution of the buffer section and the direction of its elastic deformation are changed, which can be flexibly selected according to different use requirements.

In one of embodiments, the connection between the connecting section and the buffer section is in smooth transition. The connections between the connecting section and the buffer section are all on the inner surface of the cooling body. By making the connection between the connecting section and the buffer section be in smooth transition, the stress on the connection can be dispersed, which avoids stress concentration, and improves the reliability of the cooling structure.

In one of embodiments, the cooling structure further comprises a driving member connected to the buffer section to drive the buffer section to elastically deform, or to drive the buffer section to return to the state before elastic deformation. By arranging the driving member connected to the buffer section in the cooling structure, even if the cooling body is not subjected to external pressure, the driving member can drive the buffer section to elastically deform, and the shape of the cooling body can be changed in advance with the help of the active deformation of the buffer section to prevent it from being subjected to great pressure, which protects the cooling body, and makes it more flexible to use.

According to another aspect of the present application, an embodiment of the present application further provides a battery, comprising: a box body; a battery cell, accommodated in the box body; and the cooling structure as described above, wherein the cooling structure is attached to one or more sides of the battery cell.

For the above-mentioned battery, the above-mentioned cooling structure is adopted, the supporting member is arranged in the flow channel of the cooling body, and every two adjacent connecting sections of the supporting member are fixedly connected to the two opposite inner surfaces of the cooling body in the thickness direction, which can support the cooling body in the its thickness direction. At the same time, the buffer section connects two adjacent connecting sections and is configured to be able to elastically deform after being stressed. In this way, when the cooling body is stressed, the buffer section can absorb part of the stress and elastically deform, and the stress on the cold plate is dispersed through the entire supporting member to avoid stress concentration and reduce the impact of the stress on the cooling structure and battery cells, making the battery less susceptible to damage and ensuring its normal use.

According to yet another aspect of the present application, an embodiment of the present application further provides an electrical apparatus, comprising: the above-mentioned battery, the battery being configured to provide electric energy.

The above-mentioned electrical apparatus uses the above-mentioned battery to provide electric energy. Since the battery is not easily damaged, the safety and reliability of the electrical apparatus are also improved.

### Brief Description of the Drawings

By reading the detailed description of the preferred embodiments below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
Fig. 1 is a schematic diagram showing the overall structure of a vehicle provided by an embodiment of the present application;
Fig. 2 is a schematic diagram showing the overall structure of a battery provided by an embodiment of the present application;
Fig. 3 is an exploded view showing the overall structure of a battery provided by an embodiment of the present application;
Fig. 4 is a schematic diagram showing the overall structure of a cooling structure provided by an embodiment of the present application;
Fig. 5 is a sectional view of a cooling structure provided by an embodiment of the present application;
Fig. 6 is a partial enlarged schematic diagram at A in Fig. 5;
Fig. 7 is a sectional view of a cooling structure provided by another embodiment of the present application;
Fig. 8 is a partial enlarged schematic diagram at B in Fig. 7.

Reference numerals in Detailed Description are as follows:
1: electrical apparatus;
10: battery;
100: cooling structure;
110: cooling body, 111: flow channel;
120: supporting member, 121: connecting section, 122: buffer section, 123: protruding portion, 1231: top wall, 1232: side wall;
200: box body;
300: battery cell.

### Detailed Description

The technical solutions in the embodiments of the present application will be clearly and completely described below in conjunction with the drawings in the embodiments of the present application, and it is apparent that the described embodiments are only a part of the embodiments of the present application rather than all the embodiments. All the other embodiments obtained by a person of ordinary skill in the art based on the embodiments of the present application without any creative effort shall fall within the scope of protection of the present application.

In the description of the present application, it should be understood that the orientation or positional relationships indicated by the terms "central", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the drawings and are only for facilitating the description of the present application and simplifying the description, rather than indicating or implying that the apparatus or element referred to must have a particular orientation or be constructed and operated in a particular orientation, and therefore will not be interpreted as limiting the present application.

In addition, the terms "first" and "second" are used for descriptive purposes only, and cannot be construed as indicating or implying relative importance or implicitly indicating the number of technical features indicated. Therefore, a feature defined by "first" or "second" may expressly or implicitly include at least one of the features. In the description of the present application, the meaning of "a plurality of" is at least two, for example two or three, unless otherwise explicitly and specifically defined.

In the present application, unless otherwise expressly specified and limited, the terms "mount," "link," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below", "underneath" or "under" the second feature may be a case that the first feature is directly underneath or obliquely underneath the second feature, or only means that the level of the first feature is lower than that of the second feature.

It should be noted that when an element is referred to as "fixed to" or "arranged to" another element, it may be directly on the other element or there may be an intermediate element. When one element is considered to be "connected" to another element, it may be directly connected to another element or there may also be an intermediate element. The terms "vertical", "horizontal", "top", "bottom", "left", "right" and similar expressions used herein are for illustrative purposes only, and do not indicate that they are the only means of implementation.

At present, with the development of technology, the application scenarios of power batteries are becoming wider and wider. Power batteries are not only applied in energy storage power source systems such as water, fire, wind, and solar power stations, but also widely applied in electric transportation tools, such as electric bicycles, electric motorcycles, and electric vehicles, as well as many fields, such as military equipment and aerospace. As the application fields of power batteries continue to expand, the safety of batteries during use has gradually become the focus of attention.

The applicant notices that in order to meet the growing demand for high-power discharge and fast charge, the energy density of batteries continues to increase, and the heat generated by batteries during use is also increasing. Therefore, a cooling structure needs to be added to the battery to cool the battery. **In** related technologies, the battery cells in the battery assembly will press each other due to thermal expansion to cause both the battery cells and the cooling structure bear great stress, causing the battery to be easily damaged and affecting normal use.

Based on the above considerations, in order to solve the problem that both the battery cell and the cooling structure are subjected to large stress, which makes the battery susceptible to damage and affects the normal use, the applicant has designed a cooling structure after in-depth research, where a supporting member is arranged in a flow channel of a cooling body, and every two adjacent connecting sections of the supporting member are fixedly connected to the two opposite inner surfaces of the cooling body in the thickness direction, which can support the cooling body in the its thickness direction. At the same time, the buffer section connects two adjacent connecting sections and is configured to be able to elastically deform after being stressed. In this way, when the cooling body is stressed, the buffer section can absorb part of the stress and elastically deform, and the stress on the cold plate is dispersed through the entire supporting member to avoid stress concentration and reduce the impact of the stress on the cooling structure and battery cells, making the battery less susceptible to damage and ensuring its normal use.

The cooling structure disclosed in the embodiment of the present application is applied to a battery. For a battery with the cooling structure disclosed in the embodiment of the present application, when its cooling body is stressed, the buffer section can absorb part of the stress and elastically deform, and the stress on the cold plate is dispersed through the entire supporting member to avoid stress concentration and reduce the impact of the stress on the cooling structure and battery cells, making the battery less likely to be damaged and making the battery more reliable to use.

An embodiment of the present application provides an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric vehicle toys, electric ship toys, and electric airplane toys. The spacecraft may include airplanes, rockets, space shuttles, spaceships, etc.

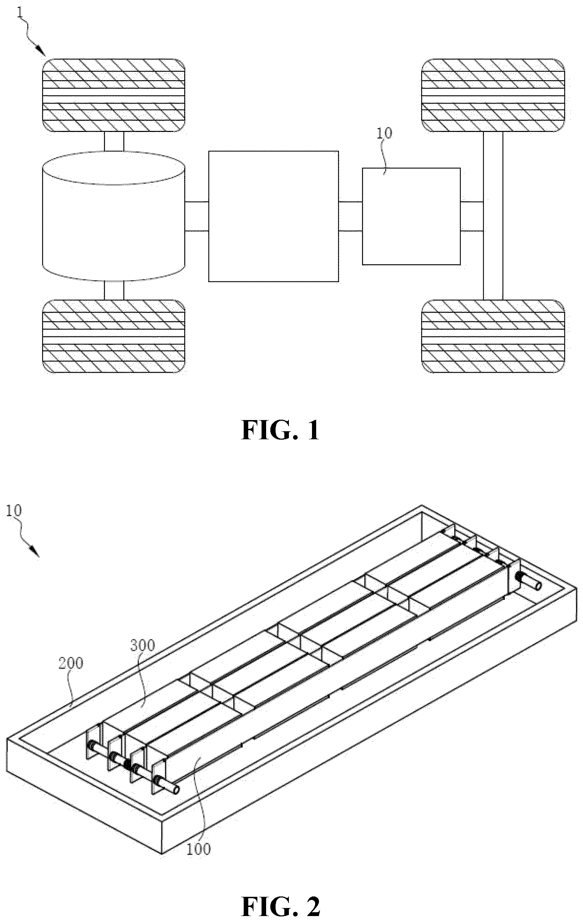

For the convenience of description in the following embodiments, an electrical apparatus 1 being a vehicle according to an embodiment of the present application is taken as an example for the description. Referring to Fig. 1, Fig. 1 is a schematic diagram showing the overall structure of a vehicle provided by an embodiment of the present application.

The vehicle may be a fuel vehicle, a gas vehicle, or a new energy vehicle, wherein the new energy vehicle may be an all-electric vehicle, a hybrid electric vehicle, an extended range electric vehicle, etc. The interior of the vehicle is arranged with a battery 10, and the battery 10 may be arranged at the bottom or head or tail of the vehicle. The battery 10 may be used to power the vehicle. For example, the battery 10 may be used as an operating power source of the vehicle. The vehicle may further include a controller and a motor. The controller is used to control the battery 10 to power the motor, for example, for meeting operating power requirements when the vehicle is starting, navigating, and driving. In some embodiments of the present application, the battery 10 may not only be used as the operating power source of the vehicle, but also be used as a driving power source of the vehicle to replace or partially replace fuel or natural gas to provide driving power for the vehicle.

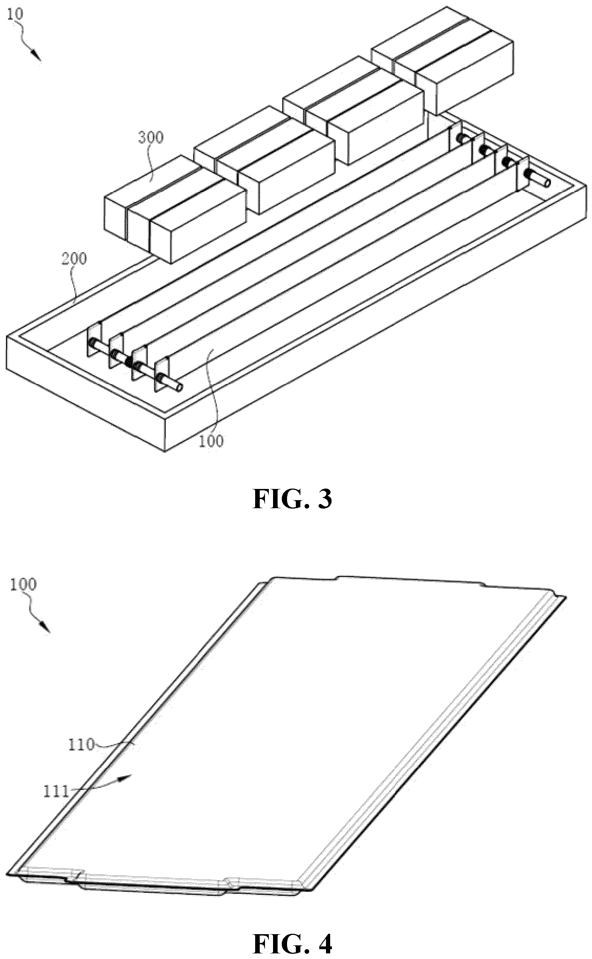

Referring to Fig. 2 to Fig. 3, Fig. 2 is a schematic diagram showing the overall structure of a battery 10 provided by an embodiment of the present application, and Fig. 3 is an exploded view showing the overall structure of a battery 10 provided by an embodiment of the present application.

The battery 10 composed of battery cells 300 can be used as a power supply system of an electrical apparatus 1, and a plurality of battery cells 300 are arranged in a box body 200. The battery cell 300 refers to the smallest unit that constitutes the battery 10. In the battery 10, there may be a plurality of battery cells 300, and the plurality of battery cells 300 may be connected in series or parallel or in a parallel-series connection, and the parallel-series connection means that there are both series connection and parallel connection in the plurality of battery cells 300. The plurality of battery cells 300 may be directly connected in series, or in parallel or in the parallel-series connection, and are accommodated in the box body 200 of the battery 10; and of course, the plurality of battery cells 300 may be connected in series, or in parallel or in the parallel-series connection to form battery modules first, and a plurality of battery modules are then connected in series, or in parallel or in the parallel-series connection, and are accommodated in the box body 200 of the battery 10.

The box body 200 is used to provide an accommodating space for the battery cells 300, and the box body 200 can be of various structures. In some embodiments, the box boy 200 may include a bottom plate and a plurality of side plates. The plurality of plates are connected end-to-end. The bottom plate is connected to the bottom of each of the side plates, and together with the side plates, encloses an accommodating space for accommodating the battery cells 300. That is, the bottom plate and the side plates enclose to form an accommodating groove. Of course, the accommodating groove formed by the bottom plate and the side plates may be of various shapes, for example, a cylinder, and a cuboid.

A cooling structure 100 is provided between two adjacent battery cells 300 in the box body 200. Depending on the arrangement of the plurality of battery cells 300 in the box body 200, the cooling structure 100 is located at different locations. In some embodiments, as shown in Figs. 2 and 3, the plurality of battery cells 300 are arranged in a rectangular array in the box body 200. In this case, the cooling structure 100 is configured to extend along the direction of the long side of the rectangle, and the plurality of cooling structures 100 are arranged at intervals along the direction of the short side of the rectangle. In this way, the utilization rate of the space inside the box body 200 can be improved, and the contact area between the cooling structure 100 and the battery cells 300 is also larger, which contributes to a good cooling effect on the battery cells 300. Of course, in other embodiments, the battery cells 300 and the cooling structure 100 can also be arranged in other directions within the box body 200, which will not be described again here.

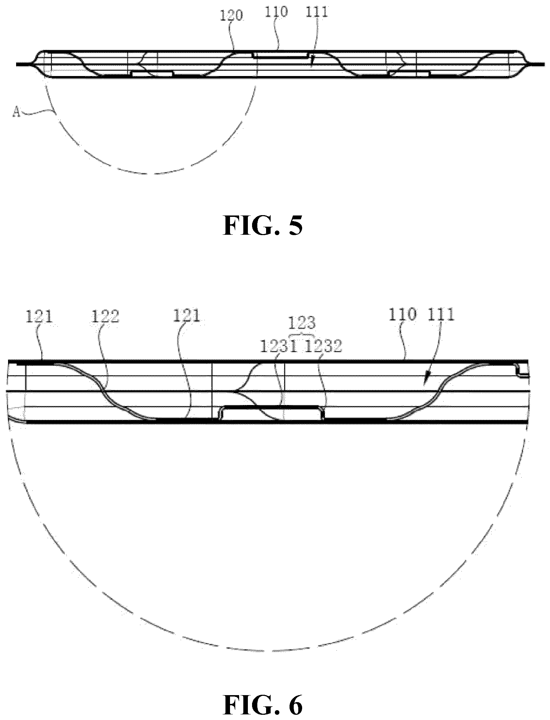

According to some embodiments of the present application, referring to Figs. 4 to 6, Fig. 4 is a schematic diagram showing the overall structure of a cooling structure 100 provided by an embodiment of the present application, Fig. 5 is a sectional view of a cooling structure 100 provided by an embodiment of the present application, and Fig. 6 is a partial enlarged schematic diagram at A in Fig. 5.

An embodiment of the present application provides a cooling structure 100. The cooling structure 100 comprises a cooling body 110 and a supporting member 120, a flow channel 111 is provided inside the cooling body 110; a supporting member 120 is provided in the flow channel 111; the supporting member 120 comprises at least two connecting sections 121 and a plurality of buffer sections 122, every two adjacent connecting sections 121 are fixedly connected to the two opposite inner surfaces of the cooling body 110 along the thickness direction, the buffer section 122 connects two adjacent connecting sections 121 and is configured to be able to elastically deform after being stressed.

The cooling structure 100 is used to cool the battery 10, wherein the flow channel 111 is a channel provided on the cooling body 110 for fluid circulation, and the flow channel 111 can confine the fluid therein so that the fluid flows in a specific direction. The cross-sectional shape, cross-sectional size, extension direction, etc. of the flow channel 111 are not limited here. During use, a heat transfer fluid can be filled in the flow channel 111. When the heat transfer fluid flows in the flow channel 111, it flows through one or more sides of the battery cell 300 to take away the heat generated by the battery cell 300, flows to the outside for heat dissipation to cool down, then flows through one or more sides of the battery cell 300 again, forming circulation to achieve the effect of cooling the battery cell 300.

The structural form of the cooling body 110 is not limited. In some embodiments, as shown in Figs. 4 and 5, the cooling body 110 may have a plate-like structure, which may comprise two opposite supporting plates. The two supporting plates are fixedly connected at the ends to form a sealed structure, a flow channel 111 is formed between the two supporting plates. The two supporting plates may be made of various materials, such as copper, iron, aluminum, stainless steel, an aluminum alloy and plastic, which is not particularly limited in this embodiment of the present application.

The cooling structure 100 is disposed on one or more sides of the battery cell 300 during use, when the battery cell 300 expands due to heat, it will press the cooling structure 100. Therefore, in an embodiment of the present application, the cooling structure 100 further comprises a supporting member 120. The supporting member 120 is provided in the flow channel 111 of the cooling body 110 to support the cooling body 110. The supporting member 120 comprises at least two connecting sections 121 and a plurality of buffer sections 122. Every two adjacent connecting sections 121 are fixedly connected to the two opposite inner surfaces of the cooling body 110 along the thickness direction, that is, the cooling body 110 has two opposite inner surfaces in its thickness direction. In any two adjacent connecting sections 121, one of them is fixedly connected to an inner surface of the cooling body 110, and the other one is fixedly connected to another inner surface of the cooling body 110, so that the two connecting sections 121 can support the cooling body 110 in its thickness direction. At the same time, a buffer section 122 is provided between every two adjacent connecting sections 121. The buffer section 122 connects the two adjacent connecting sections 121. The buffer section 122 is configured to be able to elastically deform after being stressed. In this way, when the cooling body 110 is stressed to press against the connecting section 121, the buffer section 122 can absorb part of the stress and elastically deform.

In the cooling structure 100, the length of each of the connection ends and the number of connecting sections 121 can be adjusted according to the size of the flow channel 111 in the cooling body 110. In this case, the length and number of the buffer sections 122 are adjusted for adaptation according to the parameters of the connecting sections 121, so as to ensure that the supporting member 120 can provide good support to the cooling body 110.

For the cooling structure 100 of the embodiments of the present application, the supporting member 120 is arranged in the flow channel 111 of the cooling body 110, and every two adjacent connecting sections 121 of the supporting member 120 are fixedly connected to the two opposite inner surfaces of the cooling body 110 in the thickness direction, by which the cooling body 110 can be supported in the stress direction. At the same time, the buffer section 122 connects two adjacent connecting sections 121 and is configured to be able to elastically deform after being stressed. In this way, when the cooling body 110 is stressed, the buffer section 122 can absorb part of the stress and elastically deform, and the stress on the cold plate is dispersed through the entire supporting member 120 to avoid stress concentration and reduce the impact of the stress on the cooling structure 100 and battery cells 300, making the battery 10 less susceptible to damage and ensuring its normal use.

In some embodiments, each connecting section 121 is attached to the inner surface of the cooling body 110, and at least one connecting section 121 is provided with a protruding portion 123 protruding toward the center of the flow channel 111 along the thickness direction of the cooling body 110.

As mentioned above, every two adjacent connecting sections 121 are fixedly connected to the two opposite inner surfaces of the cooling body 110 in the thickness direction. The fixed connection between the two can be welding, screwing, etc. In order to ensure the tightness of the connection between the connecting section 121 and the cooling body 110, the connecting section 121 is attached to the inner surface of the cooling body 110. In this way, the contact area between the connecting section 121 and the cooling body 110 is larger. Also, a protruding portion 123 protruding toward the center of the flow channel 111 along the thickness direction of the cooling body 110 is provided on one or more or all connecting sections 121. In this way, when the cooling body 110 is stressed, the protruding portion 123 can abut against the inner surface of the cooling body 110 opposite to the protruding portion 123, so that a certain gap is maintained between the two opposite inner surfaces of the cooling body 110 in the thickness direction, thereby ensuring the normal use of the flow channel 111 and preventing the flow channel 111 from being crushed.

In some embodiments, the protruding portion 123 comprises a top wall 1231 and side walls 1232 respectively connected to both sides of the top wall 1231; the angle between the top wall 1231 and the side walls 1232 is greater than or equal to 90 degrees (°) and less than 180 degrees (°).

The protruding portion 123 extends toward the center of the flow channel 111, so its top wall 1231 is opposite to and spaced apart from the inner surface of the cooling body 110. The top wall 1231 and the inner surface of the cooling body 110 are connected through the side wall 1232. According to the angle between the top wall 1231 and the side wall 1232, the cross-sectional shape of the protruding portion 123 varies. For example, if the angle between the top wall 1231 and the side wall 1232 is 90°, then the cross-sectional shape of the protruding portion 123 is a rectangle, and if the angle between the top wall 1231 and the side wall 1232 is greater than 90°, the cross-sectional shape of the protruding portion 123 is a trapezoid. Such a design makes the shape of the protruding portion 123 changeable, which can be adjusted according to different application requirements, thereby expanding the applicable scope of the cooling structure 100 in the embodiment. For example, the angle between the top wall 1231 and the side wall 1232 may be 90°, 100°, 110°, 120°, 135°, etc. The above data are only used as examples, and in actual embodiments, the angle between the top wall 1231 and the side wall 1232 is not limited to the above data.

In some embodiments, in order to make the structure of the protruding portion 123 symmetrical to facilitate processing and manufacturing, the angles between the two side walls 1232 and the top wall 1231 are equal. Of course, in other embodiments, the angles between the two side walls 1232 and the top wall 1231 may not be equal. In this case, the minimum angle between the top wall 1231 and the side walls 1232 refers to the smaller angle in the angles between the two side walls 1232 and the top wall 1231, and the maximum angle between the top wall 1231 and the side wall 1232 refers to the larger angle in the angles between the two side walls 1232 and the top wall 1231.

In some embodiments, the plane where the top wall 1231 is located is parallel to the inner surface of the cooling body 110; the distance between the top wall 1231 and the inner surface of the cooling body 110 connected to the top wall 1231 through the side wall 1232 is greater than or equal to 1 millimeter (mm) and less than or equal to 3 millimeters (mm).

As described above, the top wall 1231 of the protruding portion 123 is opposite to and spaced apart from the inner surface of the cooling body 110. In some embodiments, by making the plane where the top wall 1231 is located parallel to the inner surface of the cooling body 110, when the cooling body 110 is stressed to causes the main body part to come into contact with the inner surface of the cooling body 110, the contact area between the protruding portion 123 and the inner surface of the cooling body 110 can be increased, so that the force on the protruding portion 123 is more uniform, and the structure is more stable. By changing the distance between the surface of the top wall 1231 and the inner surface of the cooling body 110, the protruding height of the protruding portion 123 is changed, making it easy to adjust the protruding degree of the protruding portion 123. For example, the distance between the top wall 1231 and the inner surface of the cooling body 110 connected to the top wall 1231 through the side wall 1232 may be 1 mm, 1.5 mm, 2 mm, 2.4 mm, 3 mm, etc. The above data are only used as an example, and the distance between the top wall 1231 and the inner surface of the cooling body 110 connected to the top wall 1231 through the side wall 1232 in the actual embodiments is not limited to the above data.

In some embodiments, the protruding portion 123 is arranged symmetrically about the center line of the connecting section 121 where it is located.

In order to make the structure of the protruding portion 123 symmetrical to facilitate processing and manufacturing, the protruding portion 123 is arranged symmetrically about the center line of the connecting section 121 where it is located. In this case, the lengths of the two side walls 1232 of the protruding portion 123 are equal, and the angles between the two side walls 1232 and the top wall 1231 are also equal. This design makes the protruding portion 123 be located at the center of the connection end where it is located. In this way, the force distribution between the protruding portion 123 and the connecting section 121 is more uniform and the structural stability is higher.

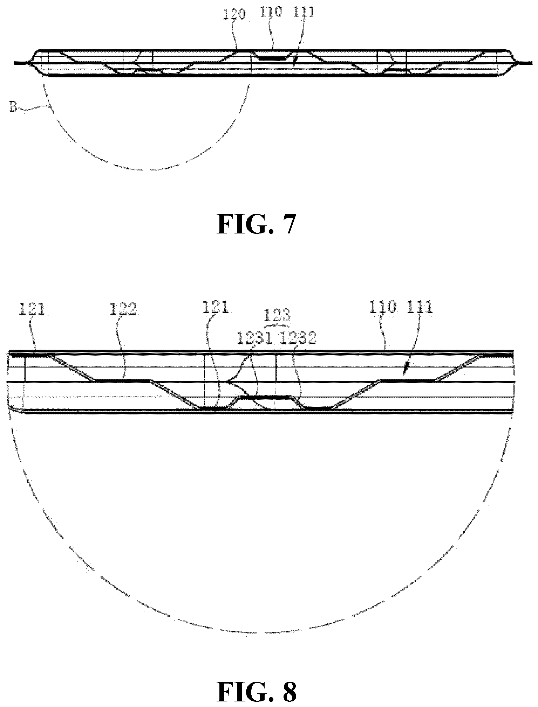

Please refer to Figs. 4 to 8 together. Fig. 7 is a sectional view of a cooling structure 100 provided by another embodiment of the present application. Fig. 8 is a partially enlarged schematic diagram at B in Fig. 7.

In some embodiments, the cross-sectional shape of the buffer section 122 is a straight line, a polyline or an arc.

In the embodiment shown in Figs. 5 to 6, the cross-sectional shape of the buffer section 122 is an arc. In the embodiment shown in Figs. 7 to 8, the cross-sectional shape of the buffer section 122 is a polyline. In other embodiments not shown, the cross-sectional shape of the buffer section 122 may also be a straight line. By changing the cross-sectional shape of the buffer section 122, the force distribution of the buffer section 122 and the direction of its elastic deformation are changed, which can be flexibly selected according to different use requirements.

In some embodiments, the connection between the connecting section 121 and the buffer section 122 is in smooth transition.

The connections between the connecting section 121 and the buffer section 122 are all on the inner surface of the cooling body 110. By making the connection between the connecting section 121 and the buffer section 122 be in smooth transition, the stress on the connection can be dispersed, which avoids stress concentration, and improves the reliability of the cooling structure 100. The smooth transition can be achieved by rounding off the connection between the connecting section 121 and the buffer section 122.

In some embodiments, the cooling structure 100 further comprises a driving member connected to the buffer section 122 to drive the buffer section 122 to elastically deform, or to drive the buffer section 122 to return to the state before elastic deformation.

The driving member can actively drive the buffer section 122 to elastically deform or return to the state before elastic deformation. By arranging the driving member connected to the buffer section 122 in the cooling structure 100, even if the cooling body 110 is not subjected to external pressure, elastic deformation can occur by driving the buffer section 122 by the driving member, so as to use the active deformation of the buffer section 122 to change the shape of the cooling body 110 in advance to prevent it from being subjected to great pressure, thereby protecting the cooling body 110 and making it more flexible to use. In some embodiments, a control device may be provided in the cooling structure 100. The control device is electrically connected to the driving member and can send signals to control the action of the driving member. A sensing device can also be provided in the cooling structure 100. The sensing device can sense temperature or pressure changes in the cooling body 110 to help the user determine the current state of the cooling structure 100.

An embodiment of the application further provides a battery 10. The battery 10 comprises a box body 200, a battery cell 300 and the cooling structure 100 as in any of the above-mentioned embodiments, wherein the battery cell 300 is accommodated in the box body 200; the cooling structure 100 is attached to one or more sides of the battery cell 300.

The cooling structure 100 is attached to one or more sides of the battery cell 300 to come into contact with and cool one or more surfaces of the battery cell 300. For the battery 10 of the embodiment of the present application, the above-mentioned cooling structure 100 is adopted, the supporting member 120 is arranged in the flow channel 111 of the cooling body 110, and every two adj acent connecting sections 121 of the supporting member 120 are fixedly connected to the two opposite inner surfaces of the cooling body 110 in the thickness direction, by which the cooling body 110 can be supported in the thickness direction. At the same time, the buffer section 122 connects two adjacent connecting sections 121 and is configured to be able to elastically deform after being stressed. In this way, when the cooling body 110 is stressed, the buffer section 122 can absorb part of the stress and elastically deform, and the stress on the cold plate is dispersed through the entire supporting member 120 to avoid stress concentration and reduce the impact of the stress on the cooling structure 100 and battery cells 300, making the battery 10 less susceptible to damage and ensuring its normal use.

An embodiment of the present application further provides an electrical apparatus 1, the electrical apparatus 1 comprises the battery 10 of any of the above-mentioned embodiments, and the battery 10 is used to provide electric energy.

The electrical apparatus 1 of the embodiment of the present application uses the above-mentioned battery 10 to provide electric energy. Since the battery 10 is not easily damaged, the safety and reliability of the electrical apparatus 1 are also improved.

The technical features of the above-mentioned embodiments can be combined arbitrarily. In order to make the description concise, not all possible combinations of the technical features in the above embodiments are described. However, all the combinations of the technical features should be considered as falling within the scope described in the specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A cooling structure, comprising:
a cooling body with a flow channel provided inside; and
a supporting member provided in the flow channel, wherein the supporting member comprises at least two connecting sections and a plurality of buffer sections, every two adjacent connecting sections are fixedly connected to the two opposite inner surfaces of the cooling body along the thickness direction, and the buffer section connects the two adjacent connecting sections and is configured to be able to elastically deform after being stressed.

2. The cooling structure according to claim 1, wherein each of the connecting sections is attached to the inner surface of the cooling body, and at least one of the connecting sections is provided with a protruding portion protruding toward the center of the flow channel along the thickness direction of the cooling body.

3. The cooling structure according to claim 2, wherein the protruding portion comprises a top wall and side walls respectively connected to both sides of the top wall; and
the angle between the top wall and the side walls is greater than or equal to 90° and less than 180°.

4. The cooling structure according to claim 3, wherein the plane where the top wall is located is parallel to the inner surface of the cooling body; and
the distance between the top wall and the inner surface of the cooling body connected to the top wall through the side wall is greater than or equal to 1 mm and less than or equal to 3 mm.

5. The cooling structure according to claim 2, wherein the protruding portion is arranged symmetrically about the center line of the connecting section where it is located.

6. The cooling structure according to any one of claims 1 to 5, wherein the cross-sectional shape of the buffer section is a straight line, a polyline or an arc.

7. The cooling structure according to any one of claims 1 to 6, wherein the connection between the connecting section and the buffer section is in smooth transition.

8. The cooling structure according to any one of claims 1 to 7, wherein the cooling structure further comprises a driving member connected to the buffer section to drive the buffer section to elastically deform, or to drive the buffer section to return to the state before elastic deformation.

9. A battery, comprising:
a box body;
a battery cell accommodated in the box body; and
the cooling structure according to any one of claims 1 to 8, the cooling structure being attached to one or more sides of the battery cell.

10. An electrical apparatus, comprising:
the battery according to claim 9, the battery being used for providing electric energy.
